(19) **Europäisches Patentamt**
**European Patent Office**
**Office européen des brevets**

(11) **EP 1 887 718 B1**

(12) **EUROPEAN PATENT SPECIFICATION**

(45) Date of publication and mention
of the grant of the patent:
**14.10.2009 Bulletin 2009/42**

(51) Int Cl.:
*H04B 10/17* (2006.01)    *H04B 10/18* (2006.01)

(21) Application number: **06291298.5**

(22) Date of filing: **10.08.2006**

(54) **Method of operating an optical amplifier, optical amplifier and transmission system**

Verfahren zum Betreiben eines optischen Verstärkers, optischer Verstärker und Übertragungssystem

Procédé d'exploitation d'un amplificateur optique, amplificateur optique et système de transmission

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.02.2008 Bulletin 2008/07**

(73) Proprietor: **Alcatel Lucent**
**75008 Paris (FR)**

(72) Inventors:
• **Charlet, Gabriel**
**91190 Villiers-Le-Bacle (FR)**

• **Antona, Jean-Christophe**
**92120 Montrouge (FR)**
• **Bigo, Sébastien**
**91300 Massy (FR)**

(74) Representative: **Thibaud, Jean-Baptiste**
**Alcatel Lucent**
**Intellectual Property & Standards**
**54 rue La Boétie**
**75008 Paris (FR)**

(56) References cited:
**US-A1- 2006 044 645      US-A1- 2006 051 039**

## Description

Background of the invention

The present invention relates to a method of operating an optical amplifier in an optical transmission system comprising a number of spans each having a respective line fibre, in particular in an optical transmission system comprising at least two different line fibre types with different tolerances to non-linearities, said amplifier being connected with a given line fibre span with respective characteristic span loss, L, and respective characteristic span non-linear tolerance, C, for operating said given span at an input power, P, corresponding to an output power of said amplifier.

The present invention also relates to an optical amplifier for use in a span of an optical transmission system comprising a number of spans each having a respective line fibre, in particular in an optical transmission system comprising at least two different line fibre types with different tolerances to non-linearities, said amplifier being connected with a given line fibre span with respective characteristic span loss, L, and respective characteristic span non-linear tolerance, C, for operating said given span at an input power, P, corresponding to its output power.

Furthermore, the present invention relates to an optical transmission system comprising a number of spans each having a respective line fibre with respective characteristic span loss, L, and respective characteristic span non-linear tolerance, C.

Optical systems or networks, e.g., Wavelength Division Multiplex (WDM) optical networks (hereinafter generally referred to as optical transmission systems) generally are heterogeneous. For instance, span lengths and losses may differ from one span to another. Moreover, different types of optical fibres co-exist on a given network. Owing to their specific features, different line fibres such as single mode fibre (SMF), LEAF fibre, or the like, are predominantly used in optical transmission systems including Reconfigurable Optical Add-Drop Multiplexers (ROADMs), which are based on already existing systems. Therefore, heterogeneity of fibre types is mostly unavoidable in optical transmission systems.

However, design of optical transmission systems according to the prior art has generally been based on homogeneity considerations. In other words: optical system design is often based on assumptions involving identical line spans of identical lengths, thus leading to performance estimators dedicated to homogeneous systems.

Similar criticism applies to prior art rules for adjustment of input powers into different spans of optical transmission systems. Known rules are mostly empirical or very basic and not adapted to system heterogeneity. As a matter of fact, in homogeneous systems all spans are identical and therefore can be operated at a common input power. In this context, the essential constraints related to eligible input power levels are the accumulation of noise along optical transmission line comprising a number of spans, which requires a certain minimum signal power for obtaining a good Optical Signal-to-Noise Ratio (OSNR), and choosing a maximum input power compliant with non-linearity constraints. If the input power for a homogeneous system lies between these two limits, then the system can work properly. For a heterogeneous optical transmission system, more complex considerations have to be taken into account: Since line fibre spans are generally different from one another, respective input powers have to be adjusted carefully in order to achieve appropriate system performance.

US 2006/0051039 A1 discloses an optical communications link wherein a number of fibre spans are interconnected through optical amplifiers. In order to compensate non-linear effects on propagated optical signals, said document proposes employing optical phase conjugation (OPC) in connection with relative scaling of fibre lengths and fibre input powers (i.e., multiplication by a pre-determined scaling factor) for to effectively produce optical fibre with negative non-linear coefficients which can be used to compensate said non-linear effects. However, this approach requires additional components (i.e., OPC devices) in the optical communications link. Additionally, the latter must be specially designed to present the above-mentioned (translational symmetric counterpart) scaling of fibre lengths. Therefore, the prior art approach suffers from high costs and limited flexibility of use. In particular, it cannot be employed with already existing systems.

Object of the invention

It is the object of the present invention to provide a method of the above-defined type which enables operating an optical transmission system while achieving optimum system performance despite of linear and non-linear propagation effects at reduced costs and extended flexibility of use in comparison with prior art solutions. It is also an object of the present invention to provide an optical amplifier for use in an optical transmission system and an optical transmission system which can be used for translating said method in practice.

Summary of the invention

According to a first aspect of the present invention the object is achieved by providing a method of the above-defined type, said method comprising the step of setting said output power relative to a reference output power, Pref, defined for a reference span with reference span loss, Lref, and reference span non-linear tolerance, Cref, said step of setting said output power comprising:

- compensating a first deviation in span loss between said reference span and said given span by means of a first contribution to said output power relative to said reference output power; and
- compensating a second deviation in span non-linear tolerance between said reference span and said given span by means of a second contribution to said output power in the form of an addend to said reference output power, said second contribution being proportional to said second deviation.

In this context, the characteristic fibre span loss, L, and the characteristic span non-linear tolerance, C, are typically expressed in decibel (dB). Input power, P, and reference output power, Pref, are typically expressed in dBm. Furthermore, said reference span loss, Lref, and said reference span non-linear tolerance, Cref, are also typically expressed in dB. Said characteristic span non-linear tolerance, C, can be defined proportional to a maximum authorised input power, or a number of fibre spans multiplied by power, or non-linear cumulated phase, expressed on a dB scale, leading to a maximum tolerable value of transmission penalty (which value is usually pre-set), for an homogeneous dispersion-managed system composed of N such identical line fibre spans operated at a same input power.

According to a second aspect of the present invention the object is achieved by providing an optical amplifier of the above-defined type, said optical amplifier comprising means for setting said output power relative to a reference output power, Pref, defined for a reference span with reference span loss, Lref, and reference span non-linear tolerance, Cref, said means comprising:

- first means for compensating a first deviation in span loss between said reference span and said given span by providing a first contribution to said output power relative to said reference output power; and
- second means for compensating a second deviation in span non-linear tolerance between said reference span and said given span by providing a second contribution to said output power in the form of an addend to said reference output power, said second contribution being proportional to said second deviation.

According to a third aspect of the present invention the object is achieved by providing an optical transmission system of the above-defined type, said optical transmission system comprising an optical amplifier according to said second aspect of the present invention.

In this way, the present invention addresses the complete issue of optical transmission system heterogeneity, taking into account problems related to both different fibre types (i.e., non-linear effects) and span loss. In this way, optimum system performance can be achieved even in completely heterogeneous optical transmission systems.

In order to provide a suitable compensation for the fibre losses, in an embodiment of the method in accordance with the present invention, said first contribution is proportional to said first deviation.

In another embodiment of the method in accordance with the present invention, the latter comprises determining said second deviation as a function of a ratio Nmax/Nref, wherein Nmax is a maximum achievable number of spans for a transmission system composed of identical spans with said reference span loss, Lref, and said characteristic span non-linear tolerance, C, and wherein Nref is a maximum achievable number of spans for a transmission system composed of identical spans with said reference span loss, Lref, and said characteristic span non-linear tolerance, Cref, respectively, i.e., repeated occurrences of said spans in respective (hypothetical) optical transmission systems, for achieving a predefined transmission related characteristic.

Said hypothetical or virtual system usually corresponds to a calibration that can be obtained for homogeneous systems. The general idea is to use said calibration to derive rules for heterogeneous systems. In this context, the value of C is characteristic of a entire system, i.e., a dispersion-managed system with identical spans, wherein said value further depends on a chosen bit rate, chosen channel spacing, and chosen modulation format. Said value cannot be measured directly or calculated easily, contrary to loss. Thus, in practice, for a given transmission system, the power or the transmission distance are varied to derive non-linear limitation.

In a corresponding embodiment of the optical amplifier in accordance with the present invention said second means are adapted to determine said second contribution as a function of a ratio Nmax/Nref, wherein Nmax is a maximum achievable number of spans for a transmission system composed of identical spans with said reference span loss, Lref, and said characteristic span non-linear tolerance, C, and wherein Nref is a maximum achievable number of spans for a transmission system composed of identical spans with said reference span loss, Lref, and said characteristic span non-linear tolerance, Cref, respectively, for achieving a predefined transmission related characteristic.

In yet another embodiment of the method in accordance with the present invention said second deviation is proportional to a quantity $\log_{10}(Nmax/Nref)$.

In a corresponding embodiment of the optical amplifier in accordance with the present invention said second means are adapted to determine said second contribution proportional to a quantity $\log_{10}(Nmax/Nref)$.

In a further embodiment of the method in accordance with the present invention said step of setting said output power comprises compensating said first and second deviations according to the relation:

$$P = Pref + \alpha \cdot (L - Lref) + 20 \cdot \beta \cdot \log_{10}(Nmax/Nref),$$

with $0.1 \leq \alpha \leq 0.9$ and $0.1 \leq \beta \leq 0.9$. A preferred choice for said parameters $\alpha$, $\beta$ is $\alpha = 0.5$ and $\beta = 0.5$.

In a corresponding embodiment of the optical amplifier in accordance with the present invention, said first and second means are adapted to compensate said first and second deviations according to the relation:

$$P = Pref + \alpha \cdot (L - Lref) + 20 \cdot \beta \cdot \log_{10}(Nmax/Nref),$$

with $0.1 \leq \alpha \leq 0.9$ and $0.1 \leq \beta \leq 0.9$, in particular $\alpha = 0.5$ and $\beta = 0.5$.

In another embodiment of the method in accordance with the present invention said step of setting said output power comprises compensating said first and second deviations according to the relation:

$$P = Pref + \alpha \cdot (L - Lref) + \beta (C - Cref),$$

with $0.1 \leq \alpha \leq 0.9$ and $0.1 \leq \beta \leq 0.9$, in particular $\alpha = 0.5$ and $\beta = 0.5$, wherein the characteristic span non-linear tolerance, C, is defined as a maximum tolerable amount of non-linearities for a related homogeneous system, i.e., composed of N° identical spans operated at an input power P° (e.g., expressed in mW), wherein C can be expressed as $10 \cdot \log_{10}(T)$ of a term T proportional to a non-linear phase (cumulated along the whole transmission system) or as a product "number of spans N° x power P°").

This is based on the insight that non-linearities do accumulate with transmission distance. By definition, they are related to input power, but with amplification, the power is set to its maximum at the beginning of each span, thence the idea of using the product between number of spans and input power into each span to quantify the "amount" of non-linearities, as known to a person skilled in the art. A natural extension of the parameter "number of spans x power" is the non-linear cumulated phase along the transmission link, since it accounts for non-linearity accumulation in the line fibre spans, including Dispersion Compensating Fibres (DCFs). With reference to the propagation equation, an important contribution in connection with non-linearities is the product between the signal power and the non-linear coefficient. Neglecting dispersion, the net effect of Kerr non-linearities is a phase of the signal, which is equal to the integral of said product over length, and which gives rise to so-called non-linear phase. In a multi-span system, said non-linear phase is proportional to formerly defined parameter N° x P° if non-linearities are focussed on identical line fibre spans. It also allows to account for DCFs, as explained in a publication by J.-C. Antona et al, "Nonlinear cumulated phase as a criterion to assess performance of terrestrial WDM systems", Optical Fiber Communication Conference and Exhibit, 2002 (OFC 2002), pp. 365-367, the entire contents of which is incorporated by reference into the present document.

In a corresponding embodiment of the optical amplifier in accordance with the present invention said first and second means are adapted to compensate said first and second deviations according to the relation:

$$P = Pref + \alpha \cdot (L - Lref) + \beta (C - Cref),$$

with $0.1 \leq \alpha \leq 0.9$ and $0.1 \leq \beta \leq 0.9$, in particular $\alpha = 0.5$ and $\beta = 0.5$.

As will be appreciated by a person skilled in the art, not all spans in an optical transmission system have to be operated according to the above-described power rules. However, system performance can be optimised if a relatively large number of spans are operated according to the principles disclosed in the present document.

Suitable values for said parameters $\alpha$, $\beta$ can be provided at system set-up for storing in the respective optical amplifiers. Alternatively or additionally, said parameters as well as other values needed for controlling output power in accordance with the present invention (e.g., Pref, Lref, Cref, Nref, C, and/or Nmax) may be determined dynamically during operation by means of suitable monitoring means.

Further advantages and characteristics of the present invention can be gathered from the following description of preferred embodiments given by way of example only with reference to the enclosed drawings. Features mentioned above as well as below can be used in accordance with the present invention either individually or in conjunction. The described embodiments are not to be regarded as an exhaustive enumeration but rather as examples with respect to a general concept underlying the present invention.

Brief description of the drawings

Fig. 1 is a schematic diagram of an optical transmission system in accordance with an embodiment of the present invention; and

Fig. 2 is a schematic block diagram of an optical amplifier in accordance with the present invention for use in the optical transmission system of Fig. 1.

Detailed description

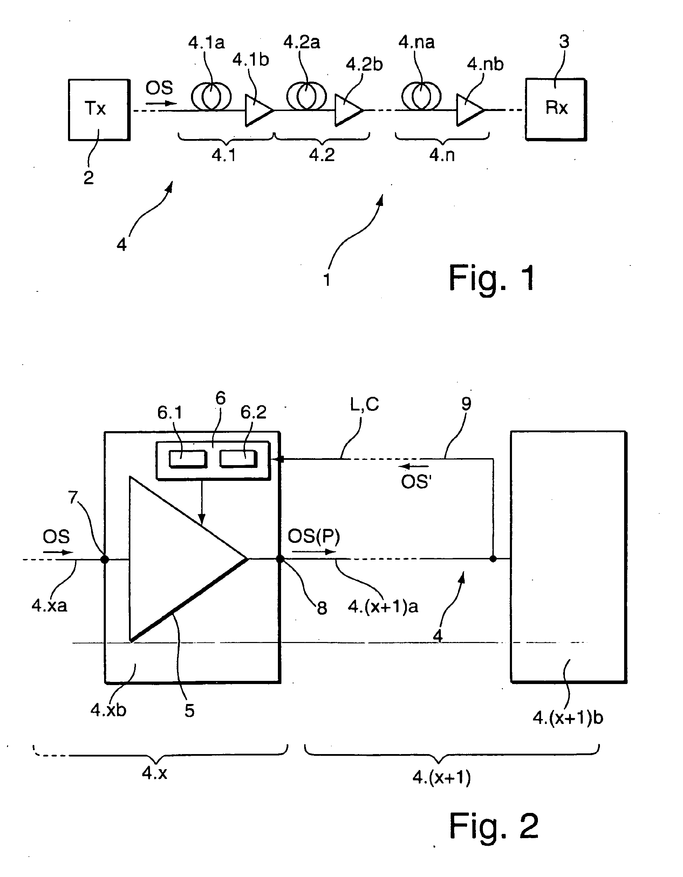

**Fig. 1** shows a schematic diagram of an optical transmission system **1** in accordance with the present invention. The optical transmission system 1 comprises a transmitter **2** and a receiver **3** for sending and receiving optical signals **OS,** respectively. Transmitter 2 and receiver 3 are connected by means of an optical transmission line **4** comprising a number of spans **4.1, 4.2, ..., 4.n.** Each span has line fibre **4.1a, 4.2a, ..., 4.na** and an optical amplifier **4.1 b, 4.2b,** ..., **4.nb,** typically a double-stage amplifier comprising a Dispersion Compensation Fibre (DCF).

Each line fibre 4.1a, 4.2a, ..., 4.na can be characterised by a respective line fibre type in terms of attenuation, length, dispersion, effective area, etc. Generally, each span 4.1, 4.2, ... 4.n can have a line fibre and/or an optical amplifier of a different type, which results in different non-linear thresholds (NLT), hereinafter denoted as C, and different span loss L for each one of spans 4.1, 4.2, ..., 4.n.

NLT C is generally expressed in decibel (dB) and is proportional to the maximum power tolerated by a dispersion-managed homogeneous optical transmission system composed of a number of identical spans of a specific type. In other words: In case of excessive power said homogeneous optical transmission system will experience intolerable non-linear effects on optical signal OS.

As already stated above, each one of spans 4.1, 4.2, ..., 4.n can also be characterised by its respective span loss L, also expressed in decibel (dB).

In this way, each span 4.1, 4.2, ..., 4.n in optical transmission system 1 is a source of accumulation of non-linear effects on a transmitted optical signal OS (due to non-linear effects along optical transmission line 4) and of optical signal-to-noise ratio (OSNR) degradation (due to span losses L in terms of combined losses in line fibres 4.1a, 4.2a, 4.na and associated optical amplifiers 4.1 b, 4.2b, ..., 4.nb).

Assume a given span in optical transmission system 1, e.g., span 4.2, with NLT C, as stated above. If one considers a (hypothetical) optical transmission system, constituted by a sequence of said given span with an assumed reference loss **Lref** (expressed in dB), then a trade-off between noise (requiring an elevated power level) and non-linearities (requiring a limited power level, as stated above) leads to a maximum achievable number **Nmax** of spans in said hypothetical optical transmission system in order to obtain a predefined transmission-related characteristic, in particular a quality-related characteristic such as a certain bit error ratio (BER). It can be shown that for said hypothetical optical transmission system the quantity $10 \cdot \log_{10}$ (Nmax) scales like C/2 (with C expressed in dB).

In the following, we assume a globally heterogeneous optical transmission system, e.g., optical transmission system 1 of Fig. 1, composed of a plurality of mutually different spans 4.1, 4.2, ..., 4.n. Furthermore, we assume a reference span of loss Lref (expressed in dB) and non-linear tolerance **Cref,** which leads to a maximum achievable number **Nref** of spans for achieving said transmission-related characteristic, and which should be operated at a power **Pref.** With respect to said reference span, each span 4.1, 4.2, ..., 4.n in optical transmission system 1 characterised by a non-linear threshold C (i.e., maximum achievable span number Nmax) and span loss L (expressed in dB) should be operated at a power **P** given by:

$$P = Pref + \alpha \cdot (L - Lref) + 20 \cdot \beta \cdot \log_{10}(Nmax/Nref),$$

with $0.1 \leq \alpha \leq 0.9$ and $0.1 \leq \beta \leq 0.9$, wherein $\alpha$ and $\beta$ may be different from one span to another.

In this way, the above defined operating power P for a given span is derived by suitably setting output power R relative to said reference power Pref by means of two mutually independent contributions. Said first contribution, $\alpha \cdot (L - Lref)$, is intended to compensate a first deviation in characteristic span loss between said reference span and said given span with characteristic loss L and characteristic NLT C. A second contribution, $20 \cdot \beta \cdot \log_{10}(Nmax/Nref)$, to the adjusted output power P is intended for compensating a second deviation in characteristic span non-linear tolerance between said reference span and said given span. In particular, said second deviation is a function of a ratio Nmax/Nref and - in the present invention - is proportional to the quantity $\log_{10}(Nmax/Nref)$, as already stated above.

In order to operate a given span, e.g., span 4.2, in optical transmission system 1 according to the present invention, i.e., at proposed power P, an output power of a preceding optical amplifier, e.g., amplifier 4.1 b in the present example, must be controlled in accordance with the above relation. This aspect of the present invention will now be explained in detail with reference to appended Fig. 2.

**Fig. 2** shows a schematic block diagram of an optical amplifier in accordance with the present invention for use in the optical transmission system of Fig. 1. In particular, Fig. 2 shows an optical amplifier **4.xb** (**x** = 1, 2, ..., n) for use in an optical transmission system, e.g., optical transmission system 1 of Fig. 1. As shown in Fig. 2, optical amplifier 4.xb comprises amplifying means **5** in operative connection with means **6** for setting an output power of amplifying means 5. Output power setting means 6 further comprises first means **6.1** and second means **6.2,** a functioning of which will become apparent later. Amplifying means 5 can be devised as an Erbium-doped fibre amplifier (EDFA), Raman amplifier, or the like.

An input **7** of optical amplifier 4.xb is connected with preceding line fibre **4.xa**, whereas output **8** of optical amplifier 4.xb is connected with following line fibre **4.(x+1)a.**

Optical amplifier 4.xb receives an optical signal OS to be amplified via line fibre 4.xa through input 7. In order to operate the following line fibre 4.(x+1)a, i.e., associated span 4.(x+1) as proposed, optical signal OS must be amplified accordingly by amplifying means 5 and must be input to line fibre 4.(x+1)a through output 8 in the form of an amplified optical signal **OS(P)** having output power P as previously defined.

To this end, output power setting means 6 is adapted to set the output power relative to reference output power Pref defined for said reference span with characteristic span loss Lref and characteristic span non-linear tolerance Cref through said first and second means 6.1, 6.2, respectively.

First means 6.1 are adapted to compensate any span loss in span **4.(x+1)** which deviates from the assumed reference span loss Lref. This contribution is weighted by means of a first numerical factor $\alpha$ for to achieve optimum system performance. Second means 6.2 is adapted to compensate the deviation from the characteristic span non-linear tolerance Cref of said reference span. Said contribution is weighted by means of a second numerical factor $\beta$, a value of which can be different from or equal to a value of said first numerical factor $\alpha$.

As a specific example, consider the case of a transmission line 4 comprising a plurality of dispersion-managed spans with ideal line amplifiers, i.e., amplifiers with noise figures independent from their respective input/output power levels. In this particular case, it can be shown that for identical spans optimum operating power levels are obtained for $\alpha = \beta = 0.5$ in the sense that this choice results in a maximum number of spans while achieving said predefined transmission-related characteristic.

As a matter of fact, it can be shown that the above-defined choice of parameters also yields optimum results in mixed or heterogeneous systems having different types of spans. Note that said optimum values of $\alpha$ and $\beta$ each represent an average value of the defined parameter bounds 0.1 and 0.9, respectively.

Values of Lref, L, Cref and C (i.e., Nref and Nmax, respectively) required by output power setting means 6 of Fig. 6 in order to set the output power of optical amplifier 4.xb in accordance with embodiments of the present invention may be defined at system setup and maintained in suitable storage means (not shown) comprised within or in operative connection with output power setting means 6.

Alternatively or additionally, at least some of said values may be determined dynamically by monitoring the optical signal OS(P) at its arrival at the following optical amplifier, e.g., optical amplifier **4.(x+1)b** of Fig. 2. This is illustrated schematically by means of feedback path **9** in Fig. 2. By monitoring feedback signal **OS'** on feedback path 9, output power setting means 6 may be enabled to determine said values L, C (Nmax), which are required to set the output power of amplifying means 5 in accordance with embodiments of the present invention.

In this way, the present invention addresses the complete issue of optical transmission system heterogeneity with respect to problems related to both fibre type (non-linearities) and span loss. As a result, achievable transmission distances of optical transmission systems without costly signal generation can be significantly increased, which is an important issue in transparent optical networks. In the context of the present invention, an increase in achievable distance of 50% or more can be obtained. Any choice of operating power other than in accordance with the proposed condition $0.1 \leq \alpha \leq 0.9$ and $0.1 \leq \beta \leq 0.9$ will result in severe degradation of system performance and corresponding reduction of transparently achievable distances, thus involving higher cost expenditure.

As will be appreciated by a person skilled in the art, the power setting rules described in the present document may either be applied to an entire optical transmission system, e.g., optical transmission system 1 of Fig. 1, or to individual spans within such an optical transmission system.

**Claims**

1. A method of operating an optical amplifier (4.xb) in an optical transmission system (1) comprising a number of spans (4.x) each having a respective line fibre (4.xa), in particular in an optical transmission system comprising at least two different line fibre types with different tolerances to non-linearities, said amplifier being connected with a given line fibre span (4.(x-1)a) with respective characteristic span loss, L, and respective characteristic span non-linear tolerance, C, for operating said given span at an input power, P, corresponding to an output power of said amplifier (4.xb), **characterised by** the step of setting said output power relative to a reference output power, Pref, defined for a reference span with reference span loss, Lref, and reference span non-linear tolerance, Cref, said step of setting said output power comprising:

   - compensating a first deviation in span loss between said reference span and said given span by means of a first contribution to said output power relative to said reference output power; and
   - compensating a second deviation in span non-linear tolerance between said reference span and said given span by means of a second contribution to said output power in the form of an addend to said reference output power, said second contribution being proportional to said second deviation.

2. The method of claim 1, **characterised in that** said first contribution is proportional to said first deviation.

3. The method of claim 1, comprising determining said second deviation as a function of a ratio Nmax/Nref, wherein Nmax is a maximum achievable number of spans (4.x) for a transmission system (1) composed of identical spans with said reference span loss, Lref, and said characteristic span non-linear tolerance, C, and wherein Nref is a maximum achievable number of spans for a transmission system (1) composed of identical spans (4.x) with said reference span loss, Lref, and said characteristic span non-linear tolerance, Cref, respectively, for achieving a predefined transmission related characteristic.

4. The method of claim 3, **characterised in that** said second deviation is proportional to a quantity $\log_{10}(Nmax/Nref)$.

5. The method of claim 3, **characterised in that** said step of setting said output power comprises compensating said first and second deviations according to the relation:

$$P = Pref + \alpha \cdot (L - Lref) + 20 \cdot \beta \cdot \log_{10}(Nmax/Nref),$$

   with $0.1 \leq \alpha \leq 0.9$ and $0.1 \leq \beta \leq 0.9$, in particular $\alpha = 0.5$ and $\beta = 0.5$.

6. An optical amplifier (4.xb) for use in a span (4.x) of an optical transmission system (1) comprising a number of spans (4.x) each having a respective line fibre (4.xa), in particular in an optical transmission system (1) comprising at least two different line fibre types with different tolerances to non-linearities, said amplifier (4.xb) being connected with a given line fibre span (4.(x+1)a) with respective characteristic span loss, L, and respective characteristic span non-linear tolerance, C, for operating said given span at an input power, P, corresponding to its output power, **characterised by** means (6) for setting said output power relative to a reference output power, Pref, defined for a reference span with reference span loss, Lref, and reference span non-linear tolerance, Cref, said means (6) comprising:

   - first means (6.1) for compensating a first deviation in span loss between said reference span and said given span by providing a first contribution to said output power relative to said reference output power; and
   - second means (6.2) for compensating a second deviation in span non-linear tolerance between said reference span and said given span by providing a second contribution to said output power in the form of an addend to said reference output power, said second contribution proportional to said second deviation.

7. The optical amplifier (4.xb) of claim 6, **characterised in that** said second means (6.2) are adapted to determine said second contribution as a function of a ratio Nmax/Nref, wherein Nmax is a maximum achievable number of spans (4.x) for a transmission system (1) composed of identical spans with said reference span loss, Lref, and said characteristic span non-linear tolerance, C, and wherein Nref is a maximum achievable number of spans (4.x) for a transmission system (1) composed of identical spans with said reference span loss, Lref, and said characteristic span non-linear tolerance, Cref, respectively, for achieving a predefined transmission related characteristic.

8. The optical amplifier (4.xb) of claim 7, **characterised in that** said second means (6.2) are adapted to determine said second contribution proportional to a quantity $\log_{10}$(Nmax/Nref).

9. The optical amplifier (4.xb) of claim 7, **characterised in that** said first and second means (6.1, 6.2) are adapted to compensate said first and second deviations according to the relation:

$$P = Pref + \alpha \cdot (L - Lref) + 20 \cdot \beta \cdot \log_{10}(Nmax/Nref),$$

10. An optical transmission system (1) comprising a number of spans (4.x) each having a respective span line fibre (4.xa) with respective characteristic span loss, L, and respective characteristic span non-linear tolerance, C, **characterised by** an optical amplifier (4.xb) according to any one of claims 6 to 9.

**Patentansprüche**

1. Ein Verfahren zum Betreiben eines optischen Verstärkers (4.xb) in einem optischen Übertragungssystem (1) mit einer Anzahl von Spannen (4.x), von denen eine jede eine entsprechende Leitungsfaser (4.xa) aufweist, insbesondere in einem optischen Übertragungssystem mit mindestens zwei verschiedenen Leitungsfaser-Typen mit verschiedenen Toleranzen gegen Nichtlinearitäten, wobei der besagte Verstärker mit einer gegebenen Leitungsfaserspanne (4.(x-1)a) mit entsprechendem charakteristischem Spannenverlust, L, und entsprechender charakteristischer nichtlinearer Toleranz der Spanne, C, zum Betreiben der besagten gegebenen Spanne bei einer Eingangsleistung, P, welche einer Ausgangsleistung des besagten Verstärkers (4.xb) entspricht, verbunden ist, **gekennzeichnet durch** den Schritt des Einstellens der besagten Ausgangsleistung relativ zu einer Referenzausgangsleistung, Pref, welche für eine Referenzspanne mit Referenzspannenverlust, Lref, und nichtlinearer Toleranz der Referenzspanne, Cref, definiert ist, wobei der besagte Schritt des Einstellens der besagten Ausgangsleistung umfasst:

- Ausgleichen einer ersten Abweichung des Spannenverlustes zwischen der besagten Referenzspanne und der besagten gegebenen Spanne **durch** einen ersten Beitrag an die besagte Ausgangsleistung entsprechend der besagten Referenzausgangsleistung; und
- Ausgleichen einer zweiten Abweichung der nichtlinearen Toleranz der Spanne zwischen der besagten Referenzspanne und der besagten gegebenen Spanne **durch** einen zweiten Beitrag an die besagte Ausgangsleistung in der Form eines Summanden zu der besagten Referenzausgangsleistung, wobei der besagte zweite Beitrag proportional zu der besagten zweiten Abweichung erfolgt.

2. Das Verfahren nach Anspruch 1, **dadurch gekennzeichnet, dass** der besagte erste Beitrag proportional zu der besagten ersten Abweichung erfolgt.

3. Das Verfahren nach Anspruch 1, umfassend das Bestimmen der besagten zweiten Abweichung als eine Funktion des Verhältnisses Nmax/Nref, wobei Nmax eine maximal erreichbare Anzahl von Spannen (4.x) für ein Übertragungssystem (1), welches aus identischen Spannen mit dem besagten Referenzspannenverlust, Lref, und der besagten charakteristischen nichtlinearen Toleranz der Spanne, C, besteht, und wobei Nref eine maximal erreichbare Anzahl von Spannen für ein Übertragungssystem (1), welches aus identischen Spannen (4.x), jeweils mit dem besagten Referenzspannenverlust, Lref, und der besagten charakteristischen nichtlinearen Toleranz der Spanne, Cref, darstellt, um eine vordefinierte übertragungsbezogenen Eigenschaft zu erzielen.

4. Das Verfahren nach Anspruch 3, **dadurch gekennzeichnet, dass** die besagte zweite Abweichung proportional zu einer Anzahl $\log_{10}$(Nmax/Nref) erfolgt.

5. Das Verfahren nach Anspruch 3, **dadurch gekennzeichnet, dass** der besagte Schritt des Einstellens der besagten Ausgangsleistung das Ausgleichen der besagten ersten und der besagten zweiten Abweichung gemäß der Relation:

$$P = Pref + \alpha \cdot (L-Lref) + 20 \cdot \beta \cdot \log_{10}(Nmax/Nref)$$

umfasst,
wobei $0,1 \leq \alpha \leq 0,9$ und $0,1 \leq \beta \leq 0,9$, insbesondere $\alpha = 0,5$ und $\beta = 0,5$.

6. Ein optischer Verstärker (4.xb) zur Verwendung in einer Spanne (4.x) eines optischen Übertragungssystems (1) mit einer Anzahl von Spannen (4.x), von denen eine jede eine entsprechende Leitungsfaser (4.xa) aufweist, insbesondere in einem optischen Übertragungssystem (1) mit mindestens zwei verschiedenen Leitungsfaser-Typen mit verschiedenen Toleranzen gegen Nichtlinearitäten, wobei der besagte Verstärker (4.xb) mit einer gegebenen Leitungsfaserspanne (4.(x+1)a) mit entsprechendem charakteristischem Spannenverlust, L, und entsprechender charakteristischer nichtlinearer Toleranz der Spanne, C, zum Betreiben der besagten gegebenen Spanne bei einer Eingangsleistung, P, welche seiner Ausgangsleistung entspricht, verbunden ist, **gekennzeichnet durch** Mittel (6) zum Einstellen der besagten Ausgangsleistung relativ zu einer Referenzausgangsleistung, Pref, welche für eine Referenzspanne mit Referenzspannenverlust, Lref, und eine nichtlineare Toleranz der Referenzspanne, Cref, definiert ist, wobei die besagten Mittel umfassen:

   - Erste Mittel (6.1) zum Ausgleichen einer ersten Abweichung des Spannenverlustes zwischen der besagten Referenzspanne und der besagten gegebenen Spanne **durch** Leisten eines ersten Beitrags an die besagte Ausgangsleistung relativ zu der besagten Referenzausgangsleistung; und
   - zweite Mittel (6.2) zum Ausgleichen einer zweiten Abweichung der nichtlinearen Toleranz der Spanne zwischen der besagten Referenzspanne und der besagten gegebenen Spanne **durch** Leisten eines zweiten Beitrags an die besagte Ausgangsleistung in der Form eines Summanden zu der besagten Referenzausgangsleistung, wobei der besagte zweite Beitrag proportional zu der besagten zweiten Abweichung erfolgt.

7. Der optische Verstärker (4.xb) nach Anspruch 6, **dadurch gekennzeichnet, dass** die besagten zweiten Mittel (6.2) dazu ausgelegt sind, den besagten zweiten Beitrag als eine Funktion eines Verhältnisses Nmax/Nref zu bestimmen, wobei Nmax eine maximal erreichbare Anzahl von Spannen (4.x) für ein Übertragungssystem (1), welches aus identischen Spannen mit dem besagten Referenzspannenverlust, Lref, und der besagten charakteristischen nichtlinearen Toleranz der Spanne, C, besteht, darstellt, und wobei Nref eine maximal erreichbare Anzahl von Spannen (4.x) für ein Übertragungssystem (1), welches aus identischen Spannen mit jeweils dem besagten Referenzspannenverlust, Lref, und der besagten charakteristischen nichtlinearen Toleranz der Spanne, Cref, darstellt, um eine vordefinierte übertragungsbezogene Eigenschaft, zu erzielen.

8. Der optische Verstärker (4.xb) nach Anspruch 7, **dadurch gekennzeichnet, dass** die besagten zweiten Mittel (6.2) dazu ausgelegt sind, den besagten zweiten Beitrag proportional zu einer Anzahl $\log_{10}(Nmax/Nref)$ zu bestimmen.

9. Der optische Verstärker (4.xb) nach Anspruch 7, **dadurch gekennzeichnet, dass** die besagten ersten und zweiten Mittel (6.1, 6.2) dazu ausgelegt sind, die besagten ersten und zweiten Abweichungen gemäß der Relation:

$$P = Pref + \alpha \cdot (L-Lref) + 20 \cdot \beta \cdot \log_{10}(Nmax/Nref)$$

auszugleichen,
wobei $0,1 \leq \alpha \leq 0,9$ und $0,1 \leq \beta \leq 0,9$, insbesondere $\alpha = 0,5$ und $\beta = 0,5$

10. Ein optisches Übertragungssystem (1) mit einer Anzahl von Spannen (4.x), von denen eine jede eine entsprechende Spannenleitungsfaser (4.xa) mit entsprechendem charakteristischem Spannenverlust, L, und entsprechender charakteristischer nichtlinearer Toleranz der Spanne, C, aufweist, **gekennzeichnet durch** einen optischen Verstärker (4.xb) gemäß einem beliebigen der Ansprüche 6 bis 9.

**Revendications**

1. Procédé d'utilisation d'un amplificateur optique (4.xb) dans un système de transmission optique (1), comprenant un certain nombre de portées (4.x) ayant chacune une fibre de ligne (4.xa) associée, notamment dans un système de transmission optique comprenant au moins deux types de fibres de ligne différents avec des tolérances différentes aux défauts de linéarité, ledit amplificateur étant relié avec une portée de fibre de ligne (4.(x-1)a) donnée ayant une perte de portée caractéristique associée, L, et une tolérance de non-linéarité de portée caractéristique associée, C, pour utiliser ladite portée donnée à une puissance d'entrée, P, correspondant à une puissance de sortie dudit amplificateur (4.xb), **caractérisé par** l'étape de réglage de ladite puissance de sortie par rapport à une puissance de sortie de référence, Pref, définie pour une portée de référence ayant une perte de portée de référence, Lref, et une tolérance de non-linéarité de portée de référence, Cref, ladite étape de réglage de ladite puissance de sortie comprenant :

   - Compensation d'un premier écart dans la perte de portée entre ladite portée de référence et ladite portée donnée au moyen d'une première contribution à ladite puissance de sortie par rapport à ladite puissance de sortie de référence ; et
   - Compensation d'un deuxième écart dans la tolérance de non-linéarité de portée entre ladite portée de référence et ladite portée donnée au moyen d'une deuxième contribution à ladite puissance de sortie sous la forme d'un ajout à ladite puissance de sortie de référence, ladite deuxième contribution étant proportionnelle audit deuxième écart.

2. Procédé selon la revendication 1, **caractérisé en ce que** la première contribution est proportionnelle audit premier écart.

3. Procédé selon la revendication 1, comprenant la détermination dudit deuxième écart en fonction d'un rapport Nmax/Nref, Nmax étant un nombre maximum réalisable de portées (4.x) pour un système de transmission (1) composé de portées identiques avec ladite perte de portée de référence, Lref, et ladite tolérance de non-linéarité de portée caractéristique, C, et Nref étant un nombre maximum réalisable de portées pour un système de transmission (1) composé de portées identiques (4.x) qui présentent respectivement ladite perte de portée de référence, Lref, et ladite tolérance de non-linéarité de portée caractéristique, Cref, afin d'obtenir une caractéristique prédéfinie en rapport avec la transmission.

4. Procédé selon la revendication 3, **caractérisé en ce que** le deuxième écart est proportionnel à une quantité $\log_{10}$(Nmax/Nref).

5. Procédé selon la revendication 3, **caractérisé en ce que** ladite étape de réglage de ladite puissance de sortie comprend la compensation desdits premier et deuxième écarts conformément à la relation :

$$P = Pref + a\,(L\text{-}Lref) + 20\,\beta\,\log_{10}(Nmax/Nref)$$

avec $0,1 \le a \le 0,9$ et $0,1 \le \beta \le 0,9$, notamment $a = 0,5$ et $\beta = 0,5$

6. Amplificateur optique (4.xb) destiné à être utilisé dans une portée (4.x) d'un système de transmission optique (1) comprenant un certain nombre de portées (4.x) ayant chacune une fibre de ligne (4.xa) associée, notamment dans un système de transmission optique (1) comprenant au moins deux types de fibres de ligne différents avec des tolérances différentes aux défauts de linéarité, ledit amplificateur (4.xb) étant relié avec une portée de fibre de ligne (4.(x-1)a) donnée ayant une perte de portée caractéristique associée, L, et une tolérance de non-linéarité de portée caractéristique associée, C, pour utiliser ladite portée donnée à une puissance d'entrée, P, correspondant à une puissance de sortie dudit amplificateur, **caractérisé par** des moyens (6) pour régler ladite puissance de sortie par rapport à une puissance de sortie de référence, Pref, définie pour une portée de référence ayant une perte de portée de référence, Lref, et une tolérance de non-linéarité de portée de référence, Cref, lesdits moyens (6) comprenant :

   - des premiers moyens (6.1) pour compenser un premier écart dans la perte de portée entre ladite portée de référence et ladite portée donnée en apportant une première contribution à ladite puissance de sortie par rapport à ladite puissance de sortie de référence ; et
   - des deuxièmes moyens (6.2) pour compenser un deuxième écart dans la tolérance de non-linéarité de portée entre ladite portée de référence et ladite portée donnée en apportant une deuxième contribution à ladite puissance de sortie sous la forme d'un ajout à ladite puissance de sortie de référence, ladite deuxième contribution étant proportionnelle audit deuxième écart.

7. Amplificateur optique (4.xb) selon la revendication 6, **caractérisé en ce que** les deuxièmes moyens (6.2) sont adaptés pour déterminer ladite deuxième contribution sous la forme d'un rapport Nmax/Nref, Nmax étant un nombre maximum réalisable de portées (4.x) pour un système de transmission (1) composé de portées identiques avec ladite perte de portée de référence, Lref, et ladite tolérance de non-linéarité de portée caractéristique, C, et Nref étant un nombre maximum réalisable de portées (4.x) pour un système de transmission (1) composé de portées identiques qui présentent respectivement ladite perte de portée de référence, Lref, et ladite tolérance de non-linéarité de portée caractéristique, Cref, afin d'obtenir une caractéristique prédéfinie en rapport avec la transmission.

8. Amplificateur optique (4.xb) selon la revendication 7, **caractérisé en ce que** lesdits deuxièmes moyens (6.2) sont adaptés pour déterminer ladite deuxième contribution proportionnellement à une quantité $\log_{10}(Nmax/Nref)$.

9. Amplificateur optique (4.xb) selon la revendication 7, **caractérisé en ce que** lesdits premiers et deuxièmes moyens (6.1, 6.2) sont adaptés pour compenser lesdits premier et deuxième écarts conformément à la relation :

$$P = Pref + a\,(L - Lref) + 20\,\beta\,\log_{10}(Nmax/Nref)$$

avec $0{,}1 \leq a \leq 0{,}9$ et $0{,}1 \leq \beta \leq 0{,}9$, notamment $a = 0{,}5$ et $\beta = 0{,}5$

10. Système de transmission optique (1) comprenant un certain nombre de portées (4.x) ayant chacune une fibre de ligne de portée (4.xa) associée avec une perte de portée caractéristique associée, L, et une tolérance de non-linéarité de portée caractéristique associée, C, **caractérisé par** un amplificateur optique (4.xb) selon l'une quelconque des revendications 6 à 9.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20060051039 A1

**Non-patent literature cited in the description**

• **J.-C. ANTONA et al.** Nonlinear cumulated phase as a criterion to assess performance of terrestrial WDM systems. *Optical Fiber Communication Conference and Exhibit,* 365-367